# EUROPÄISCHE PATENTANMELDUNG

(11) **EP 3 282 530 A2**
(43) Veröffentlichungstag der Anmeldung: **14.02.2018**
(21) Anmeldenummer: 17184219.8
(22) Anmeldetag: 01.08.2017
(51) Int. Cl.: H02G 3/32, H02G 11/00

(54) **AUFHÄNGEEINRICHTUNG FÜR EINE STROMSCHIENE EINER WINDKRAFTANLAGE UND ANORDNUNG MIT EINER AUFHÄNGEEINRICHTUNG**

(30) Priorität: 08.08.2016 DE 202016104350 U; 27.07.2017 DE 202017104491 U
(71) Anmelder: Flyteg GmbH & Co. Kg, 24568 Kaltenkirchen (DE)
(72) Erfinder: WIECHERS, Jörg, 24568 Kaltenkirchen (DE)
(74) Vertreter: Patentanwälte Behrmann Wagner PartG mbB

(57) **Zusammenfassung**

Die Erfindung betrifft eine Aufhängeeinrichtung (10; 10a, 100) für eine Stromschiene (1; 1 b) einer Windkraftanlage, mit einem Trägerelement (11, 102), das an einem ersten Verbindungsbereich (25, 103) mit einem Zugmittel (105) einer Hebeanlage verbindbar ist, mit einem zweiten Verbindungsbereich (17, 104) an dem Trägerelement (11, 102), der dazu ausgebildet ist, zumindest mittelbar mit zwei Aufhängepunkten (111) der Stromschiene (1; 1b) verbunden zu werden, und mit Übertragungsmitteln (20, 106, 107), die zwischen dem zweiten Verbindungsbereich (17, 104) und den Aufhängepunkten (111) der Stromschiene (1; 1 b) positionierbar sind, wobei der zweite Verbindungsbereich (17) am Trägerelement (11) zwei in einem ersten Abstand (A) zueinander angeordnete Verbindungspunkte (15, 16) für das Übertragungsmittel (20) aufweist, und dass der erste Abstand (A) zwischen den beiden Verbindungspunkten (15, 16) wenigstens dem Abstand (a) der beiden Aufhängepunkte (111) an der Stromschiene (1; 1 b) entspricht.

## Beschreibung

### Stand der Technik

Die Erfindung betrifft eine Aufhängeeinrichtung für eine Stromschiene einer Windkraftanlage nach dem Oberbegriff des Anspruchs 1. Ferner betrifft die Erfindung eine Anordnung, bestehend aus einer Stromschiene für eine Windkraftanlage und einer erfindungsgemäßen Aufhängeeinrichtung.

Innerhalb des Turms einer Windkraftanlage sind üblicherweise eine Vielzahl von beispielsweise zwanzig Stromschienen übereinander angeordnet und miteinander verbunden. Die Stromschienen bestehen üblicherweise aus wenigstens drei, der Stromführung dienenden Stromleitern mit jeweils rechteckförmigem Querschnitt sowie einem die Stromleiter aus Sicherheitsgründen umgebenden Stromschienengehäuse. Die Verbindung der Stromschienen im Turm der Windkraftanlage erfolgt im Bereich von Trägerkonsolen, die im Übergangsbereich zwischen zwei übereinander angeordneten Stromschienen an der Wand des Turms angeordnet bzw. befestigt sind. An diesen Trägerkonsolen erfolgt auch eine Abstützung bzw. eine Aufnahme der Gewichtskraft der jeweiligen Stromschiene oder mehrerer Stromschienen.

Insbesondere wenn einzelne Stromschienen aus einer derartigen Anordnung von übereinander angeordneten Stromschienen ausgetauscht werden müssen, beispielsweise im Reparaturfall, ist es erforderlich, eine Stromschiene möglichst einfach und ohne Beschädigung anderer Stromschienen demontieren und entweder eine reparierte oder eine als Ersatzteil dienende neue Stromschiene in die Lücke zwischen den Stromschienen montieren zu können.

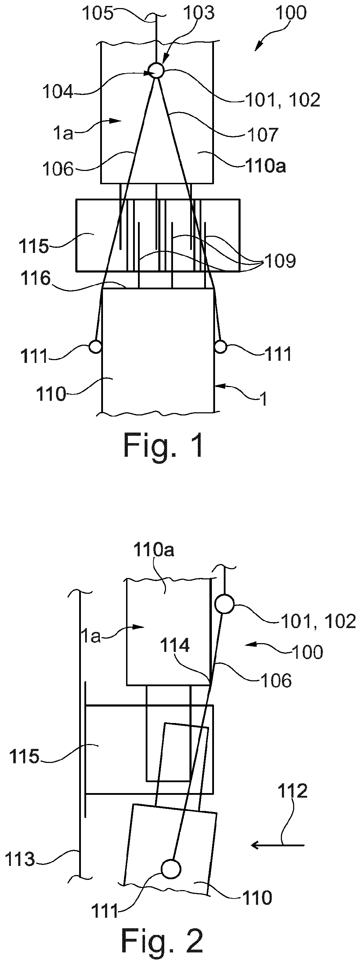

In den Fig. 1 und 2 ist hierzu eine Aufhängeeinrichtung 100 gemäß dem Stand der Technik gezeigt, die entsprechend dem Oberbegriff des Anspruchs 1 ausgebildet ist. Die Aufhängeeinrichtung 100 umfasst beispielhaft einen Schäkel 101 als Trägerelement 102. Der Schäkel 101 ist einerseits an einem ersten Verbindungsbereich 103 mit einem Zugmittel 105 einer Hebeanlage, beispielsweise einem Hebekran oder Ähnlichem, und anderseits an einem zweiten Verbindungsbereich 104 über ein oder mehrere Übertragungsmittel 106, 107 in Form von Gurten oder Ähnlichem mit einer zu montierenden Stromschiene 1 verbunden. Die Stromschiene 1 umfasst in bekannter Art und Weise mehrere, beispielsweise aus Aluminium bestehende, jeweils einen rechteckförmigen Querschnitt ausweisende Stromleiter 109, die jeweils eine elektrische Phase bilden, wobei die Stromleiter 109 in einem gemeinsamen Stromschienengehäuse 110 aufgenommen sind. Das Stromschienengehäuse 110 weist wiederum zwei seitlich angeordnete Aufhängepunkte 111 (zum Beispiel in Form von demontierbaren Ösen) auf, die mit den Übertragungsmitteln 106, 107 verbunden sind.

In der in der Fig. 1 dargestellten Stellung sind die beiden Übertragungsmittel 106, 107 mit Blick auf das Trägerelement 102 und die Aufhängungspunkte 111 an der Stromschiene 1 V-förmig angeordnet.

Bei der Montage der Stromschiene 1 ist es vorgesehen, diese zunächst an einem unteren Befestigungspunkt einer in den Fig. 1 und 2 nicht erkennbaren unteren Trägerkonsole zu montieren, so dass sich deren Gewichtkraft dort zumindest teilweise abstützt. Anschließend ist es erforderlich, die Stromschiene 1 bzw. das Stromschienengehäuse 110 fluchtend zu der oberhalb der betreffenden Stromschiene 1 angeordneten und am Turm der Windkraftanlage im Bereich einer Trägerkonsole 115 befestigten Stromschiene 1a anzuordnen. Dadurch, dass die Übertragungsmittel 106, 107 V-förmig angeordnet sind, ist ein Teil der Übertragungsmittel 106, 107 in Überdeckung mit dem Stromschienengehäuse 110a bzw. der Stromschiene 1a angeordnet. Um das obere Ende der Stromschiene 1 fluchtend zu der darüber angeordneten Stromschiene 1a zu montieren, ist es erforderlich, die Stromschiene 1 bzw. das Stromschienengehäuse 110 in der senkrecht zur Zeichenebene der Fig. 1 verlaufenden Richtung in Richtung des Pfeils 112 in der Fig. 2 in Richtung der Turmwand 113 der Windkraftanlage zu bewegen. Dies bewirkt, dass entsprechend der Darstellung der Fig. 2 die Übertragungsmittel 106, 107 zumindest im Bereich einer unteren, senkrecht zur Zeichenebene der Fig. 2 verlaufenden Kante 114 des Stromschienengehäuses 110a anliegen und dort abgeknickt werden. Weiterhin knicken die Übertragungsmittel 106, 107 auch im Bereich einer oberen Kante 116 des Stromschienengehäuses 110 ab (Fig. 1).

Dadurch, dass die Übertragungsmittel 106, 107 in ihrer Bewegung im Bereich der beiden Stromschienengehäuse 110, 110a durch Anlagekontakt an den Kanten 114, 116 gehindert werden, ist es schwierig, das Stromschienengehäuse 110 an seine zum oberen Stromschienengehäuse 110a fluchtende Sollposition zu bewegen. Dies rührt daher, dass eine derartige Stromschiene 1 mit dem Stromschienengehäuse 110 typischerweise ca. 200kg wiegt, so dass eine relativ große, in Richtung des Pfeils 112 wirkende Montagekraft erforderlich ist, wobei gleichzeitig die Zugänglichkeit in dem relevanten Bereich für einen Monteur relativ schlecht ist. Gleichzeitig muss während des Bewegens des oberen Abschnitts des Stromschienengehäuses 110 das Stromschienengehäuse 110 weiterhin durch die Übertragungsmittel 106, 107 gesichert werden. Somit ist das angesprochene Positionieren des Stromschienengehäuses 110 mittels der bekannten Aufhängeeinrichtung 100 in der Praxis äußerst schwierig bzw. mühsam und erfordert einerseits einen sehr hohen Kraftaufwand, und andererseits eine genaue und exakte Steuerung der Hebeanlage, damit die Übertragungsmittel 106, 107 in Abhängigkeit von der Position des Stromschienengehäuses 110 teilweise entlastet werden, um überhaupt eine Bewegung des Stromschienengehäuses 110 unterhalb des (oberen) Stromschienengehäuses 110a zu ermöglichen.

### Offenbarung der Erfindung

Ausgehend von dem dargestellten Stand der Technik liegt der Erfindung die Aufgabe zugrunde, eine Aufhängeeinrichtung für eine Stromschiene einer Windkraftanlage nach dem Oberbegriff des Anspruchs 1 derart weiterzubilden, dass ein verringerter Kraftaufwand sowie ein einfacheres Handling in Bezug auf die Bedienung einer Hebeanlage bei der Montage einer Stromschiene ermöglicht wird, wenn oberhalb der auszutauschenden bzw. der wieder zu montierenden Stromschiene eine andere Stromschiene angeordnet ist.

Diese Aufgabe wird erfindungsgemäß bei einer Aufhängeeinrichtung für eine Stromschiene einer Windkraftanlage mit den Merkmalen des Anspruchs 1 gelöst.

Der Erfindung liegt die Idee zugrunde, die Aufhängeeinrichtung mit einem Trägerelement auszustatten, das zwei Verbindungspunkte für ein Übertragungsmittel aufweist, wobei der Abstand der beiden Verbindungspunkte an dem Trägerelement derart an die Breite einer Stromschiene bzw. eines Stromschienengehäuses im Bereich der Aufhängepunkte der Stromschiene angepasst ist, dass im Lastfall die Übertragungsmittel (z.B. Gurte, Ketten oder ähnliches) zwischen dem Trägerelement und der daran befestigten Stromschiene bzw. dem Stromschienengehäuse seitlich neben einem oberhalb der auszutauschenden Stromschiene angeordneten Stromschiene bzw. deren Stromschienengehäuse verlaufen. Dies bewirkt, dass die Übertragungsmittel über ihre gesamte Länge zwischen den Verbindungspunkten des Trägerelements und den Aufhängepunkten an der Stromschiene bzw. dem Stromschienengehäuse seitlich an der darüber liegenden Stromschiene bzw. deren Stromschienengehäuse vorbeigeführt werden können und stets knickfrei gestreckt sind, was einen reduzierten Kraftaufwand zum Bewegen der Stromschiene in Richtung einer Turmwand sowie eine einfachere Bedienung einer Hebeanlage zur Folge hat.

Vorteilhafte Weiterbildungen der erfindungsgemäßen Aufhängeeinrichtung für eine Stromschiene einer Windkraftanlage sind in den Unteransprüchen aufgeführt. In den Rahmen der Erfindung fallen sämtliche Kombinationen aus zumindest zwei von in der Beschreibung, den Ansprüchen und/oder den Figuren offenbarten Merkmalen.

Eine besonders einfache Herstellbarkeit der Aufhängeeinrichtung wird ermöglicht, wenn das Trägerelement der Aufhängeeinrichtung eine Traverse aufweist, die in Form einer aus Metall bestehenden Stange oder eines Rohrs mit kreisförmigem oder rechteckförmigem Querschnitt ausgebildet ist. Ein derartiges Trägerelement dient der Anordnung bzw. Positionierung einerseits des Zugmittels der Hebeanlage, und andererseits der Anordnung bzw. Befestigung der von der Traverse in Richtung der Stromschiene bzw. des Stromschienengehäuses ausgehenden Übertragungsmittel.

Um sicherzustellen, dass das Trägerelement in einer horizontalen Richtung ausgerichtet ist, kann es weiterhin vorgesehen sein, dass der Verbindungsbereich, der der Verbindung des Trägerelements mit der Hebeanlage dient, zwei weitere Verbindungspunkte aufweist, die mit dem Zugmittel der Hebeanlage verbunden sind, wobei die beiden weiteren Verbindungspunkte vorzugsweise an stirnseitigen Endbereichen des Trägerelements angeordnet und in Form von Ösen ausgebildet sind.

Weiterhin sind auf dem Stromschienenmarkt Stromschienengehäuse bekannt, die an gegenüberliegenden Seitenwänden jeweils eine in Längsrichtung des Stromschienengehäuses verlaufende Aufnahme aufweisen, die einen Hinterschnitt ausbildet. Das charakteristische an einer derartigen Aufnahme ist, dass sich deren Breite in Richtung des Inneren der Stromschiene vergrößert. Um auch derartige Stromschienen bzw. Stromschienengehäuse mittels einer Aufhängevorrichtung handhaben zu können, weist eine weitere Ausführungsform der Aufhängeeinrichtung wenigstens einen (vorzugsweise zwei), in eine seitliche Aufnahme der Stromschiene einführbaren Sperrhebel auf, der an einem Traggestell schwenkbar angeordnet ist, wobei der Sperrhebel in einem Abstand zur Lagerstelle in dem Traggestell mit einem Zughebel verbunden ist, der auf der dem Sperrhebel abgewandten Seite den Verbindungspunkt aufweist.

Um bei dem Zusammenwirken des Sperrhebels mit der Aufnahme des Stromschienengehäuses eine zu starke punktuelle Belastung des Stromschienengehäuses bzw. des Sperrhebels zu vermeiden, ist es darüber hinaus bevorzugt vorgesehen, dass der Sperrhebel eine der Form der Aufnahme angepasste Kontur aufweist, sodass bei einer Anlage des Sperrhebels an der Aufnahme eine formschlüssige Verbindung mit der Aufnahme herstellbar ist.

Zur Anordnung des Sperrhebels ist es darüber hinaus bevorzugt vorgesehen, dass das Traggestell zwei parallel zueinander angeordnete Seitenwände aufweist, die parallel zu dem wenigstens einen Sperrhebel und dem Zughebel verlaufen, und dass die beiden Seitenwände mittels lösbar an den Seitenwänden angeordneter Quertraversen miteinander verbindbar sind. Durch das Vorsehen der Quertraversen wird dabei insbesondere eine Montage des Tragegestells auch bei in dem Turm der Windkraftanlage montierten Stromschienen ermöglicht.

Die Erfindung betrifft weiterhin eine Anordnung einer soweit beschriebenen Stromschiene für eine Windkraftanlage und einer erfindungsgemäßen Aufhängeeinrichtung.

Insbesondere kann es vorgesehen sein, dass die Stromschiene bzw. deren Stromschienengehäuse zwei, in Bezug zu einer Längsrichtung der Stromschiene bzw. des Stromschienengehäuses auf derselben Ebene angeordnete seitliche Aufhängepunkte aufweist, wobei die seitlichen Aufhängepunkte einen Abstand zueinander aufweisen, der größer ist als die Breite der Stromschiene bzw. des Stromschienengehäuses. Dadurch wird insbesondere sichergestellt, dass ein seitliches Positionieren bzw. Vorbeiführen der Übertragungsmittel im Bereich der beiden unmittelbar übereinander angeordneten Stromschienen bzw. Stromschienengehäuse ermöglicht wird.

Um günstige Hebelverhältnisse bei der Montage und somit geringe erforderliche Montagekräfte zu ermöglichen, hat es sich als vorteilhaft erwiesen, wenn die Länge des zwischen dem zweiten Verbindungsbereich und dem zweiten Aufhängepunkt angeordneten Übertragungsmittels etwa die Hälfte der Länge der Stromschiene beträgt, wenn der zweite Aufhängepunkt in einem Abstand von weniger als 50% der Breite des Stromschienengehäuses von der oberen Kante des Stromschienengehäuses angeordnet ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Anordnung mit einer Aufhängeeinrichtung für eine Stromschiene einer Windkraftanlage während der Montage einer Stromschiene gemäß dem Stand der Technik in einer Vorderansicht,
- Fig. 2: die Anordnung gemäß Fig. 1 in einer Seitenansicht,
- Fig. 3: eine erfindungsgemäße Aufhängeeinrichtung für eine Stromschiene einer Windkraftanlage in einer Vorderansicht,
- Fig. 4: die Anordnung gemäß Fig. 3 in einer Seitenansicht,
- Fig. 5: einen Querschnitt im Bereich einer gegenüber den Fig. 3 und 4 modifizierten Anordnung und
- Fig. 6: eine Seitenansicht auf die Anordnung gemäß der Fig. 5.

Gleiche Elemente bzw. Elemente mit gleicher Funktion sind in den Figuren mit den gleichen Bezugsziffern versehen.

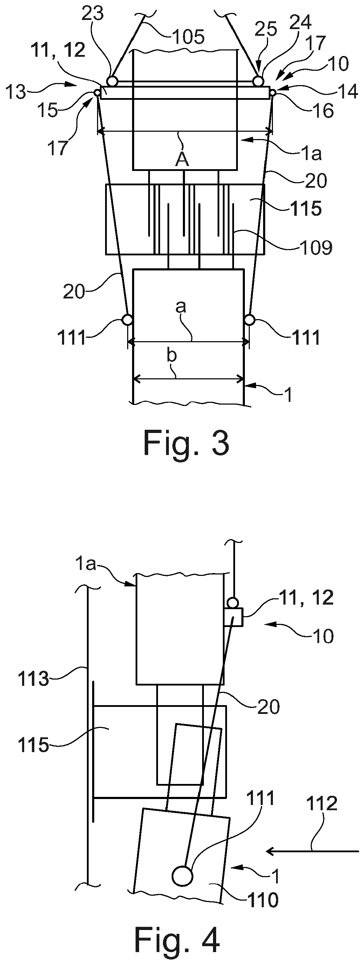

Die in den Fig. 3 und 4 gezeigte erfindungsgemäße Aufhängeeinrichtung 10 für eine Stromschiene 1 einer Windkraftanlage weist ein Trägerelement 11 in Form einer Traverse 12 auf. Das Trägerelement 11 besteht beispielhaft aus einer aus Metall bestehenden Stange oder einem Rohr und weist einen kreisförmigen oder rechteckförmigen Querschnitt auf.

Jeweils an einem stirnseitigen Endbereich 13, 14 des Trägerelements 11 ist ein erster Verbindungspunkt 15, 16 angeordnet bzw. ausgebildet, wobei die beiden ersten Verbindungspunkte 15, 16 einen Verbindungsbereich 17 ausbilden. An den beiden ersten Verbindungspunkten 15, 16 ist ein Übertragungsmittel 20 befestigt bzw. angeordnet, beispielsweise in Form wenigstens eines Gurtes, einer Kette oder ähnlichem. Das Übertragungsmittel 20 ist darüber mit jeweils einem Aufhängepunkt 111 der Stromschiene 1 verbunden, wobei die beiden Aufhängepunkte 111 im Bereich des Stromschienengehäuses 110 der Stromschiene 1 angeordnet sind und seitlich auf derselben Höhe in Bezug auf die Längsrichtung des Stromschienengehäuses 110 von Seitenwänden des Stromschienengehäuses 110 wegragen.

Wesentlich ist, dass der Abstand a zwischen den Aufhängepunkten 111 an dem Stromschienengehäuse 110 wenigstens so groß ist wie die Breite b des Stromschienengehäuses 110, und dass weiterhin der Abstand A zwischen den beiden Verbindungspunkten 15, 16 an dem Trägerelement 11 ebenfalls größer ist als die Breite b des Stromschienengehäuses 110.

Ergänzend wird erwähnt, dass die Übertragungsmittel 20 neben dem dargestellten wenigstens einen Gurt oder Ähnlichem zusätzliche weitere Elemente wie Karabinerhaken, Schäkel usw. aufweisen können, um eine einfache Befestigung der Übertragungsmittel 20 an den beiden Aufhängepunkten 111 der Stromschiene 1 bzw. des Stromschienengehäuses 110 zu ermöglichen.

Auf der den Verbindungspunkten 15, 16 abgewandten Oberseite des Trägerelements 11 weist dieses beispielsweise im Bereich der Endbereiche 13, 14 angeordnete Ösen 23, 24 auf, die der Befestigung des Zugmittels 105 dient, das wiederum mit der Hebeanlage verbunden ist.

Die beiden Ösen 23, 24 dienen als Verbindungsbereich 25 zu der Hebeanlage.

Bei der Montage des Stromschienengehäuses 110 der Stromschiene 1 ist es entsprechend der Darstellung der Fig. 4 möglich, das Stromschienengehäuse 110 in Richtung des Pfeils 112 zur Turmwand 113 zu bewegen (wobei das untere Ende der Stromschiene 1 bereits abgestützt ist und sich im Wesentlichen an seiner Sollposition befindet), wobei das Übertragungsmittel 20 ohne Anlagekontakt seitlich an den Seitenwänden der oberhalb der Stromschiene 1 befindlichen Stromschiene 1a vorbeigeführt werden kann. Dadurch ist lediglich eine relativ geringe Kraft F erforderlich, um die Stromschiene 1 in Richtung der Turmwand 113 zu bewegen.

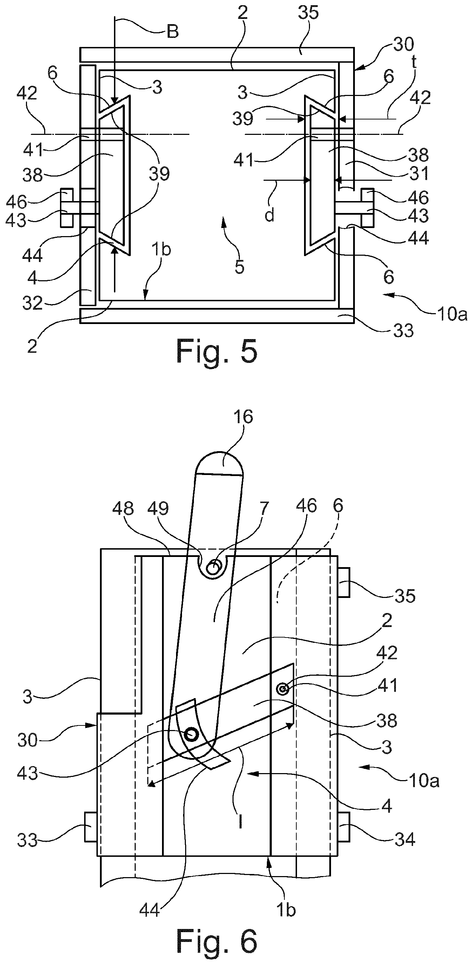

Die in den Fig. 5 und 6 dargestellte Aufhängeeinrichtung 10a unterscheidet sich von der Aufhängeeinrichtung 10 dadurch, dass sie im Zusammenhang mit einer speziell ausgebildeten Stromschiene 1b verwendet wird. Die Stromschiene 1 b weist entsprechend den Fig. 5 und 6 zwei parallel zueinander angeordnete erste Seitenwände 2 sowie zwei, ebenfalls zueinander angeordnete zweite Seitenwände 3 auf, so dass insgesamt gesehen ein im Wesentlichen rechteckförmiger Querschnitt erzielt wird. Die zweiten Seitenwände 3 zeichnen sich durch in Längsrichtung der Stromschiene 1b verlaufende Aufnahmen 4 in Form von Vertiefungen aus, deren Breite B sich in Richtung zum Innenraum 5 der Stromschiene 1b hin vergrößert, sodass in Bezug zu den Seitenwänden 2 und 3 schräg angeordnete Übergangsabschnitte 6 ausgebildet sind.

Weiterhin weist die Stromschiene 1b in einem jeweils oberen Bereich auf gegenüberliegenden Seiten jeweils ein beispielsweise in Form eines Bolzens ausgebildetes, von der zweiten Seitenwand 3 senkrecht abragendes Halteelement 7 auf.

Die Aufhängeeinrichtung 10a besteht aus einem aus mehreren Bauteilen bestehenden Traggestell 30. Das Traggestell 30 hat zwei parallel zueinander angeordnete Seitenwände 31, 32, die mittels lösbar angeordneter Quertraversen 33 bis 35 miteinander lösbar verbunden sind, derart, dass bei an den Seitenwänden 31, 32 montierten Quertraversen 33 bis 35 das Traggestell 30 eine mechanisch feste Einheit ausbildet, die den Querschnitt der Stromschiene 1b von außen her nahezu formschlüssig umgreift.

Weiterhin umfasst die Aufhängeeinrichtung 10a zwei Sperrhebel 38, die jeweils in die Aufnahme 4 der zweiten Seitenwand 3 der Stromschiene 1 b von außen her einführbar sind. Jeder Sperrhebel 38 weist eine Länge l auf, die größer ist als die Breite b der Aufnahme 4 an deren breitester Stelle. Weiterhin weist der Sperrhebel 38 auf der dem Übergangsabschnitt 6 der Stromschiene 1 b zugewandten Seite jeweils eine Kontur 39 auf, die der Kontur des Übergangsabschnitts 6 angepasst ist. Die Dicke d des Sperrhebels 38 ist im Wesentlichen der Tiefe t der Aufnahme 4 angepasst.

In einem Endbereich des Sperrhebels 38, der im dargestellten Ausführungsbeispiel entsprechend der Fig. 6 in Seitenansicht länglich ausgebildet ist, ist der Sperrhebel 38 über eine als Lagerstelle dienende Achse 41 mit der jeweiligen Seitenwand 31, 32 des Traggestells 30 verbunden, derart, dass der Sperrhebel 38 um eine Schwenkachse 42 schwenkbar ist. Auf der der Achse 41 abgewandten Seite des Sperrhebels 38 ist dieser mit einem als Verbindungsmittel dienenden Querbolzen 43 verbunden, der eine Durchgangsöffnung 44, beispielsweise in Form eines Langlochs, in der Seitenwand 31, 32 durchsetzt, und der auf der dem Sperrhebel 38 abgewandten Seite mit einem Zugmittel in Form eines Zughebels 46 verbunden ist. Der Zughebel 46 weist auf der dem Querbolzen 43 abgewandten Seite den Verbindungspunkt 16 auf.

Weiterhin weisen die beiden Seitenwände 31, 32 im Bereich einer oberen Abschlusskante 48 jeweils eine beispielsweise halbrund ausgebildete Öffnung 49 auf, die dazu dient, das Halteelement 7 aufzunehmen.

Bei in den Aufnahmen 4 montierten Sperrhebeln 38 und mit den Sperrhebeln 38 verbunden Zughebeln 46 werden die Sperrhebel 38 bei einer Zugbelastung auf die Zughebel 46 um die Schwenkachse 42 geschwenkt, wodurch die gegenüberliegenden Seiten der Sperrhebel 38 mit ihren Konturen 39 in formschlüssiger Anlage mit den Übergangsabschnitten 6 der Stromschiene 1b gelangen. Dadurch werden die Sperrhebel 38 an einem weiteren Schwenken um die Schwenkachse 42 gehindert, sodass über die Zughebel 46 die Gewichtskraft der Stromschiene 1a aufgenommen werden kann. Weiterhin sind die Halteelemente 7 im Bereich der Öffnungen 49 der Seitenwände 31, 32 angeordnet, sodass zum einen zusätzlich die Gewichtskraft der Stromschiene 1 b auf das Traggestell 30 übertragen wird, und weiterhin ein Schwenken bzw. Kippen der Stromschiene 1a in dem Traggestell 30 verhindert wird.

Die soweit beschriebene Aufhängeeinrichtung 10, 10a für die Stromschiene 1, 1a, 1 b einer Windkraftanlage kann in vielfältiger Art und Weise abgewandelt bzw. modifiziert werden, ohne vom Erfindungsgedanken abzuweichen.

### Bezugszeichen

- 1, 1a, 1b: Stromschiene
- 2: erste Seitenwand
- 3: zweite Seitenwand
- 4: Aufnahme
- 5: Innenraum
- 6: Übergangsabschnitt
- 7: Halteelement

- 10, 10a: Aufhängeeinrichtung
- 11: Trägerelement
- 12: Traverse
- 13: Endbereich
- 14: Endbereich
- 15: Verbindungspunkt
- 16: Verbindungspunkt
- 17: Verbindungsbereich
- 20: Übertragungsmittel
- 23: Öse
- 24: Öse
- 25: Verbindungsbereich

- 30: Traggestell
- 31: Seitenwand
- 32: Seitenwand
- 33: Quertraverse
- 34: Quertraverse
- 35: Quertraverse

- 38: Sperrhebel
- 39: Kontur
- 41: Achse
- 42: Schwenkachse
- 43: Querbolzen
- 44: Durchgangsöffnung
- 46: Zughebel
- 48: Abschlusskante
- 49: Öffnung

- 100: Aufhängeeinrichtung
- 101: Schäkel
- 102: Trägerelement
- 103: erster Verbindungsbereich
- 104: zweiter Verbindungsbereich
- 105: Zugmittel
- 106: Übertragungsmittel
- 107: Übertragungsmittel
- 109: Stromleiter
- 110: Stromschienengehäuse
- 110a: Stromschienengehäuse
- 111: Aufhängepunkt
- 112: Pfeil
- 113: Turmwand
- 114: untere Kante
- 115: Trägerkonsole
- 116: obere Kante

- a: Abstand
- b, B: Breite
- d: Dicke
- I: Länge
- t: Tiefe
- A: Abstand
- F: Kraft

## Patentansprüche

1. Aufhängeeinrichtung (10; 10a, 100) für eine Stromschiene (1; 1b) einer Windkraftanlage, mit einem Trägerelement (11, 102), das an einem ersten Verbindungsbereich (25, 103) mit einem Zugmittel (105) einer Hebeanlage verbindbar ist, mit einem zweiten Verbindungsbereich (17, 104) an dem Trägerelement (11, 102), der dazu ausgebildet ist, zumindest mittelbar mit zwei Aufhängepunkten (111) der Stromschiene (1; 1b) verbunden zu werden, und mit Übertragungsmitteln (20, 106, 107), die zwischen dem zweiten Verbindungsbereich (17, 104) und den Aufhängepunkten (111) der Stromschiene (1; 1b) positionierbar sind,
**dadurch gekennzeichnet,**
**dass** der zweite Verbindungsbereich (17) am Trägerelement (11) zwei in einem ersten Abstand (A) zueinander angeordnete Verbindungspunkte (15, 16) für das Übertragungsmittel (20) aufweist, und dass der erste Abstand (A) zwischen den beiden Verbindungspunkten (15, 16) wenigstens dem Abstand (a) der beiden Aufhängepunkte (111) an der Stromschiene (1; 1b) entspricht.

2. Aufhängeeinrichtung nach Anspruch 1,
**dadurch gekennzeichnet,**
**dass** das Trägerelement (11) eine Traverse (12) aufweist, die in Form einer aus Metall bestehenden Stange oder eines Rohrs mit kreisförmigem oder rechteckförmigem Querschnitt ausgebildet ist.

3. Aufhängeeinrichtung nach Anspruch 1 oder 2,
**dadurch gekennzeichnet,**
**dass** der erste Verbindungsbereich (25) zwei weitere Verbindungspunkte (23, 24) aufweist.

4. Aufhängeeinrichtung nach Anspruch 3,
**dadurch gekennzeichnet,**
**dass** die zwei Verbindungspunkte (15, 16) und die beiden weiteren Verbindungspunkte (23, 24) an dem Trägerelement (11) an gegenüberliegenden Endbereichen (13, 14) des Trägerelements (11) angeordnet sind.

5. Aufhängeeinrichtung nach Anspruch 3 oder 4,
**dadurch gekennzeichnet,**
**dass** jeweils ein Verbindungspunkt (15, 16) und ein weiterer Verbindungspunkt (23, 24) an dem Trägerelement (11) in einer senkrecht zur Erstreckung des Trägerelements (11) verlaufenden Richtung zumindest in etwa fluchtend zueinander angeordnet sind.

6. Aufhängeeinrichtung nach einem der Ansprüche 1 bis 5,
**dadurch gekennzeichnet,**
**dass** die Aufhängeeinrichtung (10a) wenigstens einen in eine seitliche Aufnahme (4) der Stromschiene (1b) einführbaren Sperrhebel (38) aufweist, der an einem Traggestell (30) schwenkbar angeordnet ist, und dass der Sperrhebel (38) in einem Abstand zur Lagerstelle (41) in dem Traggestell (30) mit einem Zugmittel (46) verbunden ist, das auf der dem Sperrhebel (38) abgewandten Seite den Verbindungspunkt (16) aufweist.

7. Aufhängeeinrichtung nach Anspruch 6,
**dadurch gekennzeichnet,**
**dass** der Sperrhebel (38) eine der Form der Aufnahme (4) der Stromschiene (1b) angepasste Kontur (39) aufweist, sodass bei einer Anlage des Sperrhebels (38) an der Aufnahme (4) eine formschlüssige Verbindung mit der Aufnahme (4) herstellbar ist.

8. Aufhängeeinrichtung nach Anspruch 6 oder 7,
**dadurch gekennzeichnet,**
**dass** das Traggestell (30) zwei parallel angeordnete Seitenwände (31, 32) aufweist, die parallel zu dem wenigstens eine Sperrhebel (38) und dem Zugmittel (46) verlaufen, und dass die beiden Seitenwände (31, 32) mittels lösbar an den Seitenwänden (31, 32) angeordneter Quertraversen (33 bis 35) miteinander verbindbar sind.

9. Aufhängeeinrichtung nach Anspruch 8,
**dadurch gekennzeichnet,**
**dass** das Zugmittel (46) auf der dem Sperrhebel (38) abgewandten Seite der Seitenwand (31, 32) des Traggestells (30) angeordnet ist, und dass die Seitenwand (31, 32) eine Durchgangsöffnung (44) aufweist, durch die ein Verbindungselement (43) zwischen dem Sperrhebel (38) und dem Zugmittel (46) hindurchragt.

10. Aufhängeeinrichtung nach einem der Ansprüche 6 bis 9,
**dadurch gekennzeichnet,**
**dass** das Traggestell (30) eine Öffnung (49) zur Aufnahme eines an der Stromschiene (1 b) angeordneten Halteelements (7) aufweist.

11. Anordnung aus einer Stromschiene (1; 1a) für eine Windkraftanlage und einer Aufhängeeinrichtung (10; 10a), die nach einem der Ansprüche 1 bis 10 ausgebildet ist.

12. Anordnung nach Anspruch 11,
**dadurch gekennzeichnet,**
**dass** die Stromschiene (1) zwei, in Bezug zur Längsrichtung der Stromschiene (1) auf derselben Ebene angeordnete Aufhängepunkte (111) aufweist, und dass die Aufhängepunkte (111) einen Abstand (a) zueinander aufweisen, der größer ist als die Breite (b) der Stromschiene (1).

13. Anordnung nach Anspruch 11,
**dadurch gekennzeichnet,**
**dass** die Stromschiene (1b) auf gegenüberliegenden Seiten jeweils eine in Längsrichtung der Stromschiene (1b) verlaufende, seitlich offene Aufnahme (4) aufweist, deren Breite (B) sich in Richtung des Innenraums (5) der Stromschiene (1 b) vergrößert.

14. Anordnung nach Anspruch 13,
**dadurch gekennzeichnet,**
**dass** die Stromschiene (1b) ein Halteelement (7) aufweist, das von einer Seitenwand (3) der Stromschiene abragt.

15. Anordnung nach einem der Ansprüche 11 bis 14,
**dadurch gekennzeichnet,**
**dass** die Länge des zwischen dem zweiten Verbindungsbereich (17) und dem zweiten Aufhängepunkt (111) angeordneten Übertragungsmittels (20) etwa die Hälfte der Länge der Stromschiene (1; 1b) beträgt, wenn der zweite Aufhängepunkt (111) in einem Abstand von weniger als 50% der Breite (b) des Stromschienengehäuses (110) von der oberen Kante (116) des Stromschienengehäuses (110) angeordnet ist.
